# NEW EUROPEAN PATENT SPECIFICATION

(11) **EP 0 670 916 B2**
(45) Date of publication and mention of the opposition decision: **26.03.2003**
(45) Mention of the grant of the patent: 27.08.1997
(21) Application number: 94900026.9
(22) Date of filing: 26.11.1993
(51) Int. Cl.: C25D 5/18, C25D 3/12

(54) **NANOCRYSTALLINE METALS**
NANOKRISTALLINE METALLE
METAUX NANOCRISTALLINS

(30) Priority: 30.11.1992 US 983205
(43) Date of publication of application: 13.09.1995
(73) Proprietor: Integran Technologies Inc., Toronto, Ontario M9W 4Z6 (CA)
(72) Inventor: ERB, Uwe, Glenburnie, Ontario K0H 1S0 (CA); EL-SHERIK, Abdelmounam M., Kingston, Ontario K7L 1S3 (CA); CHEUNG, Cedric K.S., Kingston, Ontario K7K 6K8 (CA); AUS, Martin J., Kingston, Ontario K7K 6K6 (CA)
(74) Representative: Altenburg, Udo, Dipl.-Phys.
(86) International application number: PCT/CA93/00492
(87) International publication number: WO 94/012695

(56) References cited:
- WO-A-92/15998
- DE-A- 2 555 834
- GB-A- 2 236 763
- W. Kleinekathöfer, Ch.J.Raub und E. Raub, Metalloberfläche, Band 36 (1982), pages 411-420
- "Pulse Plating - Elektrolytische Metallabscheidung mit Pulsstrom - Theorie und Praxis", Hrgb. J. Cl.Puippe und F. Leaman, Eugen W. Leuze-Verlag, Saulgau, 1990 insbes. p. 15-26, p. 30-49, p. 98-119, p. 192-195, p. 202-206, p. 240-243.
- Tai-Ping Sun, C.C. Wan und Y.M. Shy, Metal Finishing, Band 77 (1979)p. 33 - 38
- W. Kim und R. Weil. Surface and Coatins Technology, Band 38 (1989), p. 289-298
- N.R.K. Vilambi und D.-T. Chin, Plating and Surface Finishing, Jahrgang 1988, p. 67 - 72
- D.S. Lashmore, I. Weisshaus und K. Pratt, Plating and Surface Finishing, Jahrgang 1986, p. 48-55
- Dissertation W. Kleinekathöfer, RWTH Aachen, 1980, p. 1-9, p. 12, 13, p. 52-55
- P. Leisner, P. Moller und L. Alting, Galvanotechnik, Band 83 (1992), p. 3729 - 3734
- Gmelins Handbuch der anorganischen Chemie, 1968, Band Nickel, 8.Auflage, Teil AII, Lieferung 2, 1968, Verlag Chemie, Weinheim, p. 838-841
- "Grain Growth Behaviour of Nanocrystalline Nickel" von A.M.El-Sherik et al. in Mat.Res.Soc.Symp.Proc.,Vol. 238, p. 727-732, 1992
- Microstructural Evolution at Large Driving Forces during Grain Growth of Ultrafine-Grained Ni-1.2wto/oP" von D. Osmole et al. in phys.stat.sol.(a), Vol. 131, p. 569-575, 1992
- "Intercrystalline Hydrogen Transport in nanocrystalline Nickel" von G. Palumbo et al. in Scripta METALLURGICA et MATERIALIA, Vol. 25, p. 679-684, 1991
- K. J. Bryden et al., Pulsed Electrodeposition Synthesis and Hydrogen Absorption Properties of Nanostructured Palladium-iron Alloy Films, J. Electrochem. Soc. Vol. 145, No. 10, October 1998, pages 3339 to 3346.
- H: Natter et al., Nanocrystalline Palladium by Pulsed Electrodeposition, Phys. Chem. 100, 1996, p. 55 to 64.
- H. Natter et al., Nanocrystalline Copper by Pulsed Electrodeposition: The Effects of Organic Additives, Bath Temperature, and pH, J. Phys.Chem. 1996, p. 19525 to 19532
- H. Natter et al., Nanocrystalline Nickel and Nickel-Copper Alloys: Synthesis, Characterization, and Thermal Stability, J. Mater. Res., Vol. 13, No. 5, May 1998
- G. McMahon et al., Structural Transitions in Electroplated Ni-P Alloys, Journal of Materials Science Letters 8, 1989, pages 865 to 868 .
- Theory and Practice of Pulse Plating, edited by Jean-Claude Puippe and Frank Leaman, published by the American Electroplaters and Surface Finishers Society, Orlando, USA, 1986.
- W. Kleinekathöfer, Ch.J.Raub und E. Raub, W. Kleinekathöfer, Ch.J.Raub und E. Raub, Metalloberfläche, Band 36 (1982), pages 411-420.
- "An In-Situ TEM Study of the Thermal Stability of Nanocrystalline NI-P" von K. Boylan et al. in Scripta METALLURGICA et MATERIALIA, Vol. 25, pages 2177-2716, 1991
- "Deviations from Hall-Petch Behaviour in As-Prepared Nanocrystalline Nickel" von E.M.El-Sherik et al. in Scripta METALLURGICA et MATERIALIA, Vol. 27, pages 1185-1188, 1992

## Description

### Field of Invention

This invention relates to a process as defined in the precharacterizing portion of claim 1.

### Background of Invention

Nanocrystalline materials are a new class of disordered solids which have a large volume fraction (up to 50% or more of the atoms) of defect cores and strained crystal lattice regions. The physical reason for the reduced density and the non-lattice spacing between the atoms in the boundary cores is the misfit between the crystal lattice of different orientation along common interfaces. The nanocrystalline system preserves in the crystals a structure of low energy at the expense of the boundary regions which are regions at which all of the misfit is concentrated so that a structure far away from equilibrium is formed (GLeiter, Nanocrystalline Materials, Prog. in Matls Science, Vol 33, pp 223-315, 1989). A structure of similar heterogeneity is not formed in thermally induced disordered solids such as glasses. Nanocrystalline materials typically have a high density (10¹⁹ per cm³) of grain interface boundaries. In order to achieve such a high density, a crystal of less than about 100 nm diameter is required. Over the past few years great efforts to make smaller and smaller nanocrystals, down to about 10 nm have been made. It would appear, however, that the properties of even smaller nanocrystals (less than 10 nm) offer significant advantages over larger nanocrystals, particularly in the area of hardness, magnetic behaviour hydrogen storage, and wear resistance.

Nanocrystalline materials, which are also known as ultrafine grained materials, nanophase materials or nanometer-sized crystalline materials, can be prepared in several ways such as by sputtering, laser ablation, inert gas condensation, oven evaporation, spray conversion pyrolysis, flame hydrolysis, high speed deposition, high energy milling, sol gel deposition, and electrodeposition. Each of these methods has its special advantages and disadvantages and not all methods are suitable for all types of nanocrystalline materials. It is becoming apparent, however, that electrodeposition is the method of choice for many materials. The major advantages of electrodeposition include (a) the large number of pure metals, alloys and composites which can be electroplated with grain sizes in the nanocrystalline range, (b) the low initial capital investment necessary and (c) the large body of knowledge that already exists in the areas of electroplating, electrowinning and electroforming.

Using electrodepositing techniques, nanocrystalline electrodeposits of nickel and other metals and alloys have been produced over the years with ever smaller diameters down to the 10-20 nm range. Heretofore, it has not been possible to get sizes below about 10 nm diameter. Small crystal sizes increase the proportions of grain boundaries and triple junctions in the material. It is known that room temperature hardness increases with decreasing grain size in accordance with the known Hall-Petch phenomenon. However, it has now been determined that as the number of triple junctions in the material increases, at about 30 nm down, there is a deviation from normal Hall-Petch behaviour and hardness does not continue to increase as the grain size falls below a critical value. Indeed, it has now been shown that in pure nickel nanocrystalline materials the hardness reaches a peak in the 8-10 nm range. Other materials even show a decrease in hardness as the grain size decreases below about 10 nm.

Binary nickel-iron nanocrystalline alloys have been described in a University of California Ph.D. thesis by D.L. Grimmett in 1990. Nickel-Phosphorus and Cobalt-Tungsten nanocrystalline materials are also known (C. McMahon et al Microstr. Sci. 17, 447 (1989) and Erb et al Nanostructured Mats Vol 2 383-390 (1993)).

Nanocrystalline materials have improved magnetic properties compared to amorphous and conventional polycrystalline materials. Of particular importance is the saturation magnetization, which should be as high as possible regardless of grain size. However, previous studies on gas-condensed nanocrystalline nickel (Gong et al, J. Appl. Phys 69, 5119, (1991)) reported decreasing saturation magnetization with decreasing grain size. It would appear, however, that this phenomenon is associated with the method of production as electroplated nanocrystalline nickel in accordance with the present invention shows little change in saturation magnetization. The object of the present invention is to provide a process for making nanocrystalline materials of less than 100 nm in diameter.

According to the invention there is provided a process for electrodepositing a selected metallic material in nanocrystalline form on a substrate in which an aqueous, electrolyte containing ions of said selected metallic material is introduced into an electrolytic cell having an anode and a cathode, while maintaining said electrolyte at a temperature in the range between about 15° and about 75°C, characterised by passing a D.C. current, having a peak current density in the range between about 0.1 and about 3.0 A/cm², at pulsed intervals during which said current passes for a time period in the range of about 0.1 to about 50 milliseconds and does not pass for a time period in the range of about 1 to about 500 milliseconds, between said anode and said cathode so as to deposit said selected metallic material in nanocrystalline form and having a grain size of less than 100 nm on said cathode.

The process hereinbefore defined may preferably be characterised by maintaining said electrolyte at a temperature in the range between about 55° and about 75°C and may be further characterised in that said peak current density is in the range between about 1.0 and 3.0/A/cm², at pulsed intervals during which said current passes for a time period in the range of about 1.0 to about 5 milliseconds and does not pass for a time period in the range of about 30 to 50 milliseconds.

According to a second aspect of the invention there is provided a nanocrystalline nickel material produced by a process according to claim 1, characterised by an average grain size of less than 11 nanometres and by a hardness which is at a maximum in a size range of 8 - 10 nm, and by saturation magnetization properties substantially equal to those of said nickel material in normal crystalline form.

### Brief Description of Drawings

Figure 1 is a diagrammatic sketch of one embodiment of an apparatus for use in the process of the present invention;
Figure 2 is a graph illustrating current density versus time during a plating cycle;
Figure 3 is a graph of hardness (VHN) versus grain size for nanocrystalline nickel (Hall Petch plot);
Figure 4 is a graph of magnetic saturation (emu/g) versus grain size for nanocrystalline nickel produced according to the present invention, and compared to the prior art;
Figure 6 is a graph illustrating composition of ternary Ni Fe Cr alloys produced in baths containing different concentrations of chromium;
Figure 7 is a graph illustrating resistivity of nanocrystalline nickel as a function of grain size;
Figure 8 is a graph illustrating excess resistivity as a function of intercrystalline volume fraction; and
Figure 9 shows polarization curves for nano- and poly-crystalline nickel.

### Detailed Description of Preferred Embodiments

As noted hereinabove pulsed direct current electrodeposition has been found to produce superior nanocrystalline materials, and particularly nickel, having a grain size of less than about 11 nm. Ternary or quaternary nickel-iron alloys having a grain size of less than about 100 nm can also be produced by pulsed D.C. electrodeposition or by D.C. electroplating as well as nanocrystalline Co, Cr, Cu and Fe.

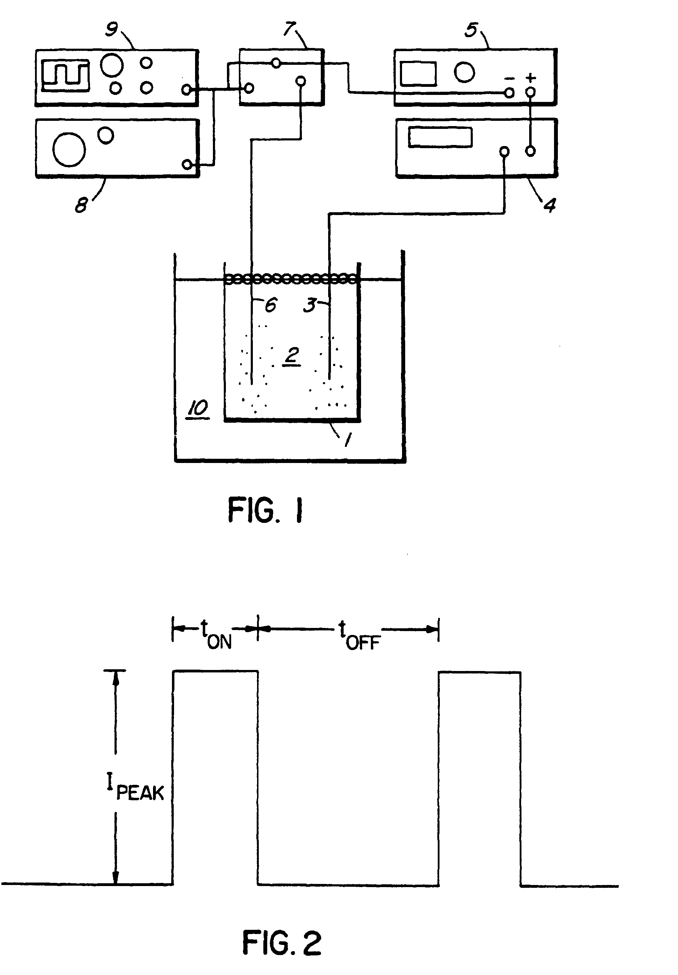

The invention will now be described with particular reference to the production of nanocrystalline nickel and Figure 1 is a sketch showing a laboratory apparatus for carrying the present invention into practice. A plating cell 1, generally of glass or thermoplastic construction, contains an electrolyte 2 comprising an aqueous acid solution of nickel sulfate, nickel chloride, boric acid and selected grain size inhibitors, grain nucleators and stress relievers, to be described in more detail hereinbelow. An anode 3 is connected to an ammeter 4 (Beckman, Industrial 310) in series connection to a conventional DC Power Source 5 (5 amp, 75 volt max output). The anode may be any dimensionally stable anode (DSA) such as platinum or graphite, or a reactive anode, depending on the material desired to be deposited. Preferably, in the case of nickel deposition, the anode is an electrolytic nickel anode. A cathode 6 is connected to the power source 5 via a transistored switch 7. Cathode 6 may be fabricated from a wide variety of metals such as steel, brass, copper and or nickel, or non-metal such as graphite. Preferably, cathode 6 is fabricated from titanium to facilitate stripping of the nickel deposited thereon. Switch 7 is controlled by a wave generator 8 (WaveTEK, Model 164) and the wave form is monitored on an oscilloscope 9 (Hitachi V212).

The temperature of the electrolyte 2 is maintained in the range between about 55 and 75° C by means of a constant temperature bath 10 (Blue M Electric Co.). A preferred temperature range is about 60-70° C and most preferably about 65° C. The pH is controlled by additions such as Ni₂CO₃ powder or 7:1 H₂SO₄: HCl as required.

The quality of the deposit and the crystalline structure thereof are functions of the peak current density in the cell 1, and the rate of pulsing the current. Figure 2 illustrates the maximum current density (Iₚₑₐₖ)as a function of time. It will be noted that generally the time off (t_{off}) is longer than the time on (tₒₙ) and that the current density Iₚₑₐₖ may vary between about 1.0A/cm² and about 3.0A/cm². The tₒₙ may vary between about 1.0 and 5.0 msec., with a preferred range of 1.5 - 3.0 msec and an optimum value of 2.5 msec. The t_{off} may range from about 30 msec. to 50 msec. with an optimum of 45 msec. It will be appreciated that Iₚₑₐₖ, tₒₙ and t_{off} are interrelated and may be varied within the stated ranges. If the Iₚₑₐₖ is too high, there is a risk that the deposited material will bum and, if too low, the grain size will increase.

In all of the following examples, which are illustrative only and not limiting on the invention, the electrolytic cell described above was employed with an electrolytic nickel anode and a titanium cathode and an aqueous electrolyte (Bath 1) containing:

| | |
|---|---|
| Nickel Sulphate (BDH) | 300 gm/l |
| Nickel Chloride (BDH) | 45 gm/l |
| Boric Acid (BDH) | 45 gm/l |

in distilled water. The pH was adjusted, as noted above, by addition of Ni₂CO₃ powder or 7:1 H₂ SO₄: HCI. The temperature was maintained at 65° C, for a standard plating time of 3 hours. Saccharin is a known stress reliever and grain refining agent and may be added in amounts up to about 10 gm/l. Other stress relievers and grain refining agents which may be added include coumarin sodium lauryl sulfate and thiourea. If the bath temperature rises, it may be desirable to add a grain size inhibitor such as phosphorous acid in relatively small amounts up to about 0.5 - 1 gm/l.

### Example 1

Using the apparatus described with reference to Figure 1 and a basic bath electrolyte composition described above as "Bath 1°, 0.5 gm/l saccharin (Aldrich) was added and the pH adjusted to pH 2. The Iₚₑₐₖ was 1.9 A/cm² and tₒₙ was 2.5 m sec. and t_{off} was 45 m sec. The result was a porosity free nanocrystalline nickel deposit of 0.250 - 0.300 mm thickness with an average grain size of 35 nm.

### Example 2

The procedure and operating conditions of Example 1 were repeated except that the saccharin concentration was increased to 2.5 gm/l. The result was a porosity free deposit of 0.220 - 0.250 mm thickness with an average grain size of 20 nm.

### Example 3

Example 1 was repeated except that the saccharin concentration was increased to 5 gm/l. The result was a porosity free deposit of 0.200 mm thickness with an average grain size of 11 nm.

### Example 4

Example 1 was repeated except that the pH was adjusted to pH 4.5 and the saccharin concentration was increased to 10 gm/l. The result was a porosity free deposit of 0.200 - 0.220 mm- thickness with an average grain size of 6 nm.

### Example 5

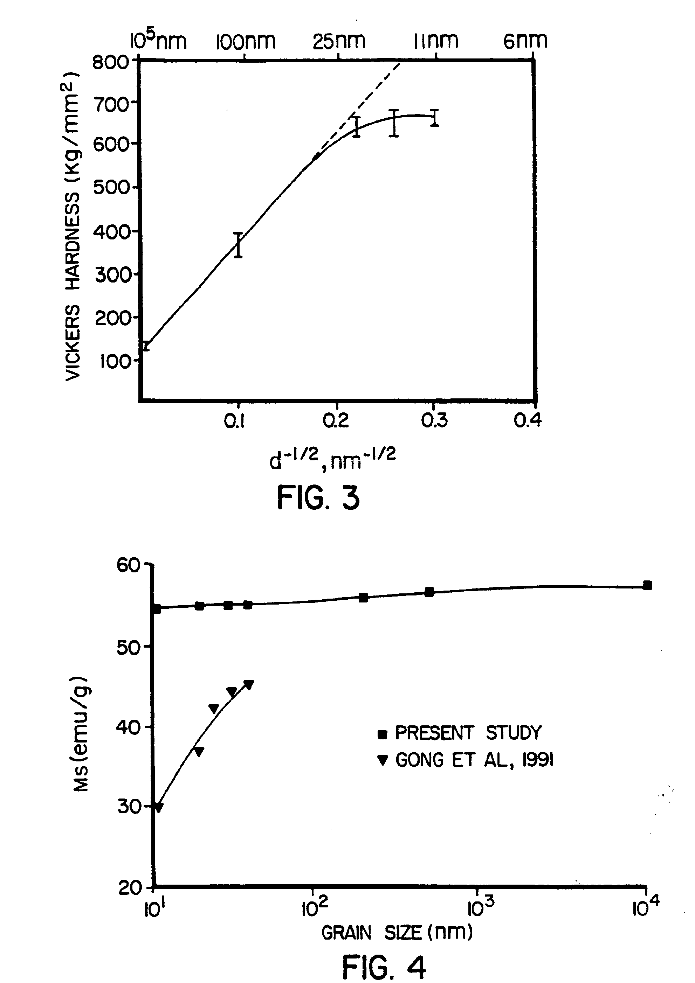

The products of Examples 1-3 were subjected to hardness testing using a standard Vickers hardness technique. The results are tabulated in Figure 3 and illustrate that at the large grain sizes porosity free electroplated nickel nanocrystals obey the well established Hall-Petch relationship, i.e. increasing hardness with decreasing grain size. However, for the very small sizes of the present invention there is a clear deviation from the Hall-Petch relationship indicating a maximum hardness in the 8 - 10 nm size range.

### Example 6

The saturation magnetization of the products of Examples 1-3 was measured using conventional methods. The results are tabulated in Figure 4 and compared with the saturation magnetization of gas condensed nanocrystalline nickel as reported by Gong et al, supra. It will be noted that while Gong et al report decreasing saturation magnetization with decreasing grain size, the products of the present invention show very little change in saturation magnetization with grain size variation, and even at the smallest grain sizes it is essentially the same as for conventional nickel.

The nanocrystalline materials of this invention, and particularly nanocrystalline nickel can be used to provide hard, wear resistant coatings on many surfaces. They can also be used as hydrogen storage materials, as catalysts for hydrogen evolution and as magnetic materials.

While the invention has been described thus far with reference particularly to nanocrystalline nickel, the principles thereof are equally applicable to nanocrystalline soft magnet materials, which are frequently ternary and quatemary iron-nickel alloys, and more particularly include Permalloy® (78.5 Ni 17.1 Fe3.8 Cr. 0.6Mn), Hy Mu® (80Ni 16 Fe 4Mo) Supermalloy® (79Ni 15.7 Fe 5Mo 0.3Mn) and Mumetal (76Ni 17Fe 5Cu 2Cr) (Woldman, Engineering Alloys, 4th Ed, 1962). Other ternary and quaternary alloys may contain elements selected from Ni, Fe, Co, Zn, W, Cr, Cu, Mo, Mn, V, Ti, Mg, Si, P, C and S. The soft magnetic materials find utility in many applications but are particularly useful for recording head applications which require high electrical resistivity to improve high frequency permeability and to minimize eddy current losses. These materials also exhibit good wear characteristics.

### Example 7 Production of Ternary Nickel-Iron Chromium Alloys

The electrolyte comprised an aqueous solution containing (in grams/litre of solution):

| | |
|---|---|
| NiCl₂·6H₂O | 50 |
| CrCl₃·6H₂O | 0 - 100 |
| FeCl₂·4H₂O | 1 |
| NaCI | 0 - 50 |
| B(OH)₃ | 25 |
| NH₄Cl | 25 |

The bath temperature was maintained at a temperature between about 15°C and about 50°C (preferably room temperature) and the pH of the bath was maintained in the range 1-3, depending on the chromium content. At high chromium levels the pH was lowered to prevent formation of chromium hydroxide.

Using a pulsed D.C. electrolytic cell, periodic pulse reversal was practised resulting in some grain size reduction and improved surface quality. Quality may also be improved using the stress relievers previously described and in addition sodium citrate, EDTA, citric acid or sodium fluoride.

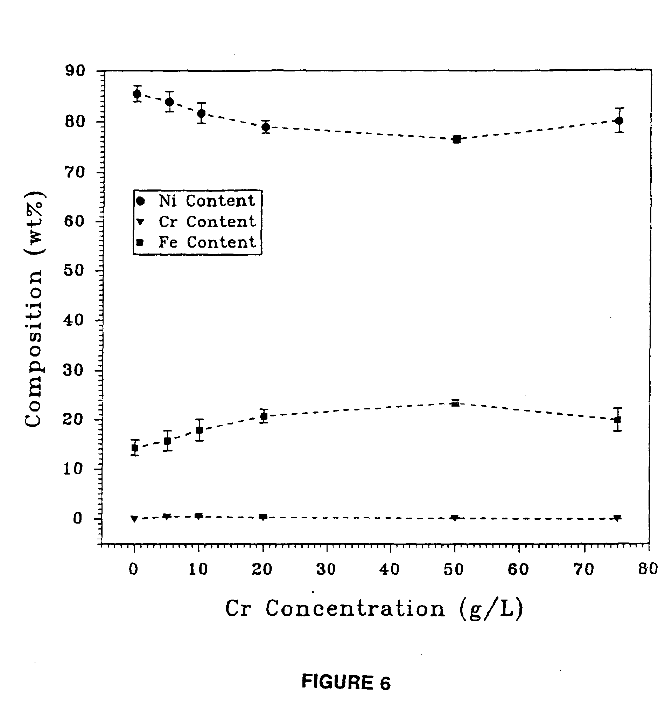

The composition of the alloy deposited on the copper cathode was analyzed by energy dispersive x-ray spectroscopy and the results, in terms of the chromium concentration of the bath were plotted in Figure 6. It will be noted that the chromium content of the alloy is substantially constant at about 1% but the nickel content tends to fall from a maximum of about 86% at 0 g/l Cr in the bath to a minimum of about 78% at a concentration of 50 g/l Cr in the bath. Scanning electron microscopy indicated that the grain size of the alloy product was less than 100 nanometres while x-ray diffraction studies indicated a grain size of about 10-15 nanometres with some grain sizes up to about 37 nm.

The electrical, mechanical and magnetic properties of the pure nanocrystalline nickel products of Examples 3 and 4 have been studied in some detail, and it has been determined, somewhat surprisingly in view of previously published results (Gong et al J. Appl. Phys. 69, 5119 (1991)) that saturation magnetization (Ms) of nanocrystalline nickel produced by the process of examples 2, 3 and 4 is essentially independent of grain size. This is, however, consistent with recent calculations (Szpunar et al, Condensed Matter Physics, in press) that show that the magnetic moment of atoms located in special high angle grain boundaries is only insignificantly reduced. Even in an amorphous structure the reduction in Ms is less than 20% and for 10nm grain sizes with an intercrystalline volume fraction of 27%, the over all reduction in Ms is less than 5%.

Coercivity (Hc) of 50nm nanocrystalline nickel is about 2.0 kA/m which is about 50% lower than that of conventional polycrystalline (100 nm plus) material (3.0 kA/m). Further reduction in grain size results in an increase in coercivity back to the level of the polycrystalline material, which is believed due to the transition from multidomain to single domain grains.

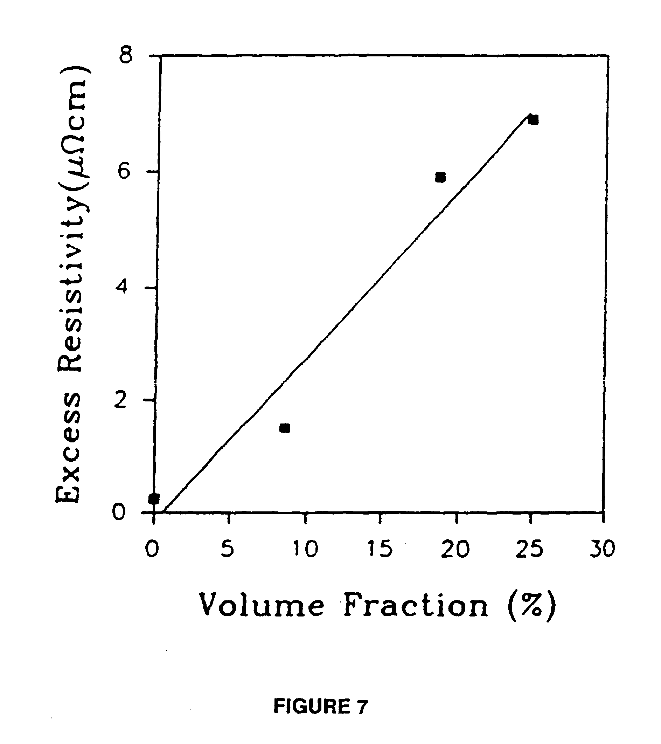

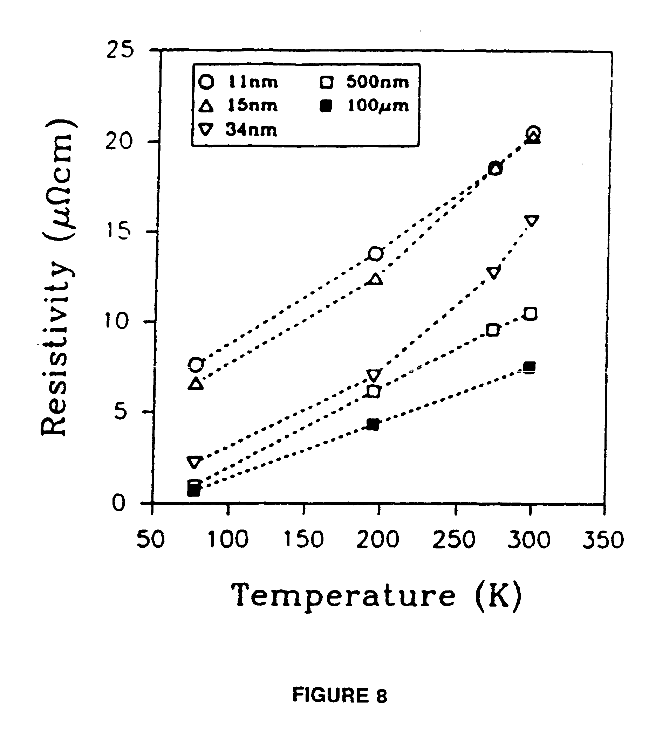

Figure 7 shows that the room temperature electrical resistivity of the material with a grain size of 11nm is increased by a factor of three over the resistivity value observed for conventional polycrystalline material. At lower temperatures this factor increases to approximately five times. This behaviour can be understood in terms of electron scattering at the grain boundaries and triple junctions in the material which should result in an increase in resistivity with increasing intercrystalline volume fraction. This is demonstrated in Figure 8 which shows the excess resistivity as a function of the intercrystalline volume fraction for the grain sizes shown in Figure 7. The excess resistivity is defined here as the total resistivity minus the resistivity of conventional polycrystalline nickel for which the intercrystalline volume fraction is negligible. The intercrystalline volume fractions in Figure 8 were derived for a grain boundary thickness of 1nm.

Reduced grain size usually results in increased hardness as a result of Hall-Petch strengthening. The Hall-Petch graph for electrodeposited Ni is shown in Figure 3. Although there is deviation from linearity for grain sizes less than 30nm the important finding is that the hardness of the material is increased by a factor of 5 when reducing the grain size from 100µm to 10nm.

Using pin-on-disk wear testing under dry conditions an enhancement of the wear resistance by a factor of four was observed for the same materials.

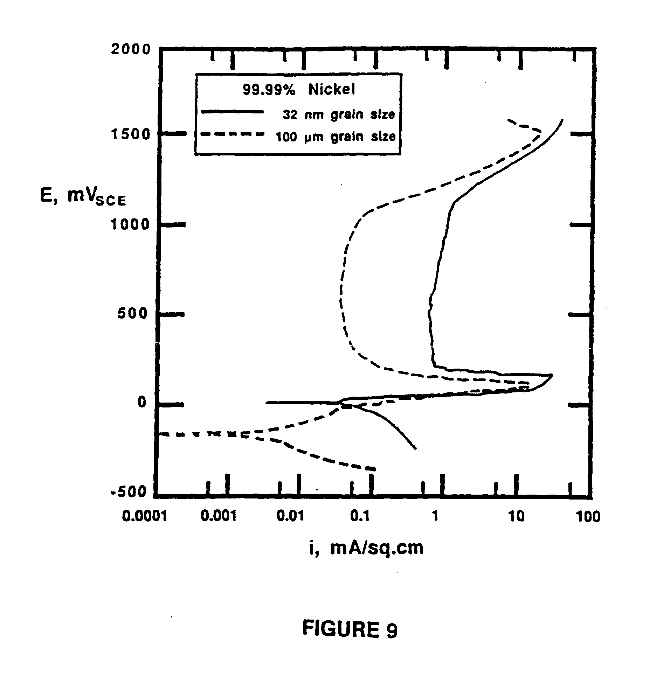

The corrosion behaviour of nanocristalline electrodeposits has recently been studies by potentiodynamic and potentiostatic testing in a 2N H₂SO₄ solution. As shown in Figure 9 nanocrystalline nickel exhibits the same active-passive-transpassive behaviour as observed in normal crystalline nickel. However the current density in the passive range for nanocrystalline materials is higher than for conventional nickel. This is believed to be due to the increased defect concentration in the passive layer on nanocrystalline, material. On the other hand, nanoprocessed Ni did not show the detrimental type of localized corrosion along the grain boundaries which is usually observed for conventional nickel. Therefore, although the general corrosion rate is somewhat enhanced, the overall excellent corrosion performance of nickel is likely not sacrificed by nano-processing.

Thus using the invention it is possible to provide nanocrystalline metals, binary, ternary and quaternary alloys having a grain size of less than 100 nm and some of which have enhanced magnetic properties.

## Claims

1. A process for electrodepositing a selected metallic material in nanocrystalline form on a substrate in which an aqueous, electrolyte containing ions of said selected metallic material is introduced into an electrolytic cell having an anode and a cathode, while maintaining said electrolyte at a temperature in the range between about 15° and about 75°C, **characterised by** passing a D.C. current, having a peak current density in the range between about 0.1 and about 3.0 A/cm², at pulsed intervals during which said current passes for a time period In the range of about 0.1 to about 50 milliseconds and does not pass for a time period in the range of about 1 to about 500 milliseconds, between said anode and said cathode so as to deposit said selected metallic material in nanocrystalline form and having a grain size of less than 100 nm on said cathode.

2. A process as claimed in claim 1, **characterised in that** said selected metallic material is a pure metal selected from the group consisting of Co, Cr, Cu, Fe.

3. A process as claimed in Claim 1 or Claim 2, **characterised by** maintaining said electrolyte at a temperature in the range between about 55° and about 75° and further **characterised in that** said peak current density is in the range between about 1.0 and about 3.0/A/cm², at pulsed intervals during which said current passes for a time period in the range of about 1.0 to about 5 milliseconds and does not pass for a time period in the range of about 30 to about 50 milliseconds.

4. A process as claimed in claim 3, **characterised in that** said selected metallic material is nickel.

5. A process as cl-aimed in claim 3, **characterised in that** said anode is selected from nickel, platinum and graphite.

6. A process as claimed in claim 5, **characterised in that** said cathode is selected from titanium, steel, brass, copper, nickel, and graphite.

7. A process as claimed in claim 6, **characterised in that** said electrolyte additionally contains up to about 10g/l of a stress reliever and grain refining agent.

8. A process as claimed in claim 7, **characterised in that** said stress reliever and grain refining agent is selected from saccharin, coumarin sodium lauryl sulfate and thiourea.

9. A process as claimed in claim 8, **characterised in that** said electrolyte additionally contains a grain size inhibitor.

10. A process as claimed in claim 9, **characterised in that** said grain size inhibitor is phosphorous acid.

11. A process as claimed in claim 3, **characterised in that** said current passes for periods between 1.5 and 3.0 milliseconds and does not pass for a period between 40 and 50 milliseconds.

12. A process as claimed in claim 1, **characterised by** a step of periodic pulse reversal.

13. A process as claimed in claim 11, **characterised in that** said bath is maintained at a temperature in the range 60-70°C.

14. A process as claimed in claim 12, **characterised in that** said current passes for 2.5m sec and does not pass for 45m sec.

15. A process as claimed in claim 13, **characterised in that** said bath is maintained at a temperature of 65°C.

16. A process as claimed in claim 11, **characterised in that** said peak current density is in the range 1.5 - 2.2 A/cm².

17. A process as claimed in claim 16, **characterised by** a peak current density of about 1.9 A/cm².

18. A nanocrystalline nickel material produced by a process according to claim 1 **characterised by** an average grain size of less than 11 nanometres and by a hardness which is at a maximum in a size range of 8 - 10 nm, and by saturation magnetization properties substantially equal to those of said nickel material in normal crystalline form.

19. A process as claimed in claim 1, **characterised in that** said electrolyte includes up to 10g/l of a stress reliever and grain refining agent selected from the group consisting of saccharin, sodium citrate, ED-TA, citric acid, sodium fluoride, coumarin, sodium lauryl sulfate and thiourea.

20. A process as claimed in claim 3, **characterised by** a step of periodic pulse reversal.

## Patentansprüche

1. Verfahren zum elektrochemischen Abscheiden eines ausgewählten metallischen Materials in nanokristalliner Form auf einem Substrat, in welchem Verfahren in eine elektrolytische Zelle, die eine Anode und eine Kathode aufweist, ein wässriger Elektrolyt eingeführt wird, der Ionen dieses ausgewählten metallischen Materials enthält, während der Elektrolyt bei einer Temperatur im Bereich von etwa 15°C bis etwa 75°C gehalten wird, **dadurch gekennzeichnet, daß** ein Gleichstrom mit einer maximalen Stromdichte von etwa 0,1 bis etwa 3,0 A/cm² in gepulsten Intervallen hindurchgeleitet wird, währenddessen der Strom zwischen der Anode und der Kathode für eine Zeitdauer im Bereich von etwa 0,1 bis etwa 50 Millisekunden fließt und für eine Zeitdauer im Bereich von etwa 1 bis etwa 500 Millisekunden nicht fließt, um so das ausgewählte metallische Material in nanokristalliner Form mit einer Korngröße von weniger als 100 nm auf der Kathode abzuscheiden.

2. Verfahren nach Anspruch 1, **dadurch gekennzeichnet, daß** das ausgewählte metallische Material ein reines Metall ist, ausgewählt aus der Gruppe, bestehend aus Co, Cr, Cu, Fe.

3. Verfahren nach Anspruch 1 oder Anspruch 2, **dadurch gekennzeichnet, daß** der Elektrolyt bei einer Temperatur im Bereich zwischen etwa 55°C und 75°C gehalten wird, und ferner **dadurch gekennzeichnet, daß** die maximale Stromdichte im Bereich zwischen etwa 1,0 und 3,0 A/cm² liegt und zwar bei gepulsten Intervallen, währenddessen der Strom für eine Zeitdauer im Bereich von etwa 1,0 bis etwa 5 Millisekunden fließt und für eine Zeitdauer im Bereich von etwa 30 bis etwa 50 Millisekunden nicht fließt.

4. Verfahren nach Anspruch 3, **dadurch gekennzeichnet, daß** das ausgewählte metallische Material Nickel ist.

5. Verfahren nach Anspruch 3, **dadurch gekennzeichnet, daß** die Anode ausgewählt wird aus Nickel, Platin und Graphit.

6. Verfahren nach Anspruch 5, **dadurch gekennzeichnet, daß** die Kathode ausgewählt wird aus Titan, Stahl, Messing, Kupfer, Nickel und Graphit.

7. Verfahren nach Anspruch 6, **dadurch gekennzeichnet, daß** der Elektrolyt zusätzlich bis zu etwa 10 g/l ein Mittel zum Spannungsverringern und zur Kornverfeinerung enthält.

8. Verfahren nach Anspruch 7, **dadurch gekennzeichnet, daß** das Mittel zum Spannungsverringern und zur Kornverfeinerung ausgewählt wird aus Saccharin, Cumarin, Natriumlaurylsulfat und Thioharnstoff.

9. Verfahren nach Anspruch 8, **dadurch gekennzeichnet, daß** der Elektrolyt zusätzlich einen Korngrößeninhibitor enthält.

10. Verfahren nach Anspruch 9, **dadurch gekennzeichnet, daß** der Korngrößeninhibitor Phosphorsäure ist.

11. Verfahren nach Anspruch 3, **dadurch gekennzeichnet, daß** der Strom für eine Zeitdauer zwischen 1,5 und 3,0 Millisekunden fließt und für eine Zeitdauer zwischen 40 und 50 Millisekunden nicht fließt.

12. Verfahren nach Anspruch 1, **gekennzeichnet durch** einen Schritt der periodischen Pulsumkehr.

13. Verfahren nach Anspruch 11, **dadurch gekennzeichnet, daß** das Bad bei einer Temperatur im Bereich von 60° bis 70°C gehalten wird.

14. Verfahren nach Anspruch 12, **dadurch gekennzeichnet, daß** der Strom für 2,5 Millisekunden fließt und für 45 Millisekunden nicht fließt.

15. Verfahren nach Anspruch 13, **dadurch gekennzeichnet, daß** das Bad bei einer Temperatur von 65°C gehalten wird.

16. Verfahren nach Anspruch 11, **dadurch gekennzeichnet, daß** die maximale Stromdichte im Bereich von 1,5 bis 2,2 A/cm² liegt.

17. Verfahren nach Anspruch 16, **gekennzeichnet durch** die maximale Stromdichte von etwa 1,9 A/cm².

18. Nanokristallines Material aus Nickel, hergestellt durch das Verfahren gemäß Anspruch 1, **gekennzeichnet durch** eine mittlere Korngröße von weniger als 11 Nanometern und **durch** eine Härte mit einem Maximum bei 8 bis 10 nm sowie **durch** Eigenschaften der Sättigungsmagnetisierung, die im wesentlichen gleich denen des Nickelmaterials in normaler kristalliner Form sind.

19. Verfahren nach Anspruch 1, **dadurch gekennzeichnet, daß** der Elektrolyt bis zu 10 g/l Mittel zum Spannungsverringern und zur Kornverfeinerung einschließt, ausgewählt aus der Gruppe, bestehend aus Saccharin, Natriumcitrat, EDTA, Citronensäure, Natriumfluorid, Cumarin, Natriumlaurylsulfat und Thioharnstoff.

20. Verfahren nach Anspruch 3, **gekennzeichnet durch** den Schritt der periodischen Pulsumkehr.

## Revendications

1. Procédé pour le dépôt électrolytique d'un matériau métallique sélectionné, sous forme nanocristalline sur un substrat, dans lequel un électrolyte aqueux contenant des ions dudit matériau métallique sélectionné est introduit à l'intérieur d'une cellule d'électrolyte comportant une anode et une cathode, tout en maintenant ledit électrolyte à une température comprise entre environ 15°C et environ 75°C, **caractérisé par** le fait de faire passer un courant continu, de densité de courant maximale comprise entre environ 0,1 et environ 3,0 A/cm², à intervalles pulsés durant lesquels ledit courant passe pendant une durée comprise entre environ 0,1 et environ 50 millisecondes et ne passe pas pendant une durée comprise entre environ 1 et environ 500 millisecondes, entre ladite anode et ladite cathode afin de déposer sous forme nanocristalline ledit matériau métallique sélectionné dont les grains ont une grosseur inférieure à 100 nm sur ladite cathode.

2. Procédé selon la revendication 1, **caractérisé en ce que** ledit matériau métallique sélectionné consiste en un métal pur choisi dans le groupe constitué de Co, de Cr, de Cu, de Fe.

3. Procédé selon la revendication 1 ou 2, **caractérisé par** le fait de maintenir ledit électrolyte à une température comprise entre environ 55°C et environ 75°C et **caractérisé en outre en ce que** ladite densité de courant maximale est comprise entre environ 1,0 et environ 3,0 A/cm², à intervalles pulsés durant lesquels ledit courant passe pendant une durée comprise entre environ 1,0 et environ 5 millisecondes et ne passe pas pendant une durée comprise entre environ 30 et environ 50 millisecondes.

4. Procédé selon la revendication 3, **caractérisé en ce que** ledit matériau métallique sélectionné est le nickel.

5. Procédé selon la revendication 3, **caractérisé en ce que** ladite anode est choisie parmi le nickel, le platine et le graphite.

6. Procédé selon la revendication 5, **caractérisé en ce que** ladite cathode est choisie parmi le titane, l'acier, le laiton, le cuivre, le nickel et le graphite.

7. Procédé selon la revendication 6, **caractérisé en ce que** ledit électrolyte contient en plus jusqu'à environ 10 g/l d'un agent de stabilisation et d'affinage de grains.

8. Procédé selon la revendication 7, **caractérisé en ce que** ledit agent de stabilisation et d'affinage de grains est choisi parmi la saccharine, la coumarine, le laurylsulfate de sodium et la thiourée.

9. Procédé selon la revendication 8, **caractérisé en ce que** ledit électrolyte contient en plus un inhibiteur granulométrique.

10. Procédé selon la revendication 9, **caractérisé en ce que** ledit inhibiteur granulométrique est l'acide phosphoreux.

11. Procédé selon la revendication 3, **caractérisé en ce que** ledit courant passe pendant des périodes comprises entre 1,5 et 3,0 millisecondes et ne passe pas pendant une période comprise entre 40 et 50 millisecondes.

12. Procédé selon la revendication 1, **caractérisé par** une étape d'inversion périodique des impulsions.

13. Procédé selon la revendication 11, **caractérisé en ce que** ledit bain est maintenu à une température de 60 à 70°C.

14. Procédé selon la revendication 12, **caractérisé en ce que** ledit courant passe pendant 2,5 msec et ne passe pas pendant 45 msec.

15. Procédé selon la revendication 13, **caractérisé en ce que** ledit bain est maintenu à une température de 65°C.

16. Procédé selon la revendication 11, **caractérisé en ce que** ladite densité de courant maximale est comprise entre 1,5 et 2,2 A/cm².

17. Procédé selon la revendication 16, **caractérisé par** une densité de courant maximale d'environ 1,9 A/cm².

18. Matériau en nickel nanocristallin, préparé selon un procédé selon la revendication 1, **caractérisé par** une grosseur moyenne de grains inférieure à 11 nanomètres et par une dureté qui a une étendue granulométrique au maximum comprise entre 8 et 10 nm, et par des caractéristiques de saturation magnétique pratiquement égales à celles dudit matériau en nickel sous forme cristalline normale.

19. Procédé selon la revendication 1, **caractérisé en ce que** l'électrolyte comprend jusqu'à 10 g/l d'un agent de stabilisation et d'affinage de grains choisi dans le groupe constitué de la saccharine, du citrate de sodium, de l'EDTA, de l'acide citrique, du fluorure de sodium, de la coumarine, du laurylsulfate de sodium et de la thiourée.

20. Procédé selon la revendication 3, **caractérisé par** une étape d'inversion périodique des impulsions.
